# EUROPEAN PATENT SPECIFICATION

(11) **EP 2 564 073 B1**
(45) Date of publication and mention of the grant of the patent: **07.12.2016**
(21) Application number: 11720058.4
(22) Date of filing: 29.04.2011
(51) Int. Cl.: F15B 15/10

(54) **SELF-RETRACTING ACTUATOR**
SELBSTRÜCKSTELLENDER AKTOR
ACTIONNEUR AUTO-RÉTRACTABLE

(30) Priority: 04.11.2010 BE 201000653; 29.04.2010 GB 201007255
(43) Date of publication of application: 06.03.2013
(73) Proprietor: Materialise NV, 3001 Leuven (BE)
(72) Inventor: MASSOELS, Jo, B-3800 Sint-Truiden (BE)
(74) Representative: DeltaPatents B.V.
(86) International application number: PCT/EP2011/056849
(87) International publication number: WO 2011/135079

(56) References cited:
- BE-A- 350 235
- FR-A1- 2 392 261

## Description

### FIELD OF THE INVENTION

The present invention relates to actuator systems comprising one or a series of expansion chambers comprising one or more cylindrical chambers connected through a connection channel. The present invention further relates to the use of an actuator according to the present invention for providing a linear or other type of displacement.

### BACKGROUND

An actuator is commonly known as a mechanical device for performing a movement, which by converting for instance hydraulic, pneumatic, mechanical or electrical energy into some kind of motion. Linear actuators are actuators where the resulting motion provides a force in a linear manner. The motion of the actuator may be achieved in various ways including converting mechanical motion (e.g. rotary motion) into a linear displacement.

BE 350 235 A relates to a variable volume cylinder and FR 2 392 261 A1 relates to a working cylinder with a linear movement.

Hydraulic and pneumatic actuators convert hydraulic or pneumatic energy into a displacement. These types of actuators typically involve a hollow cylinder containing a piston. The two sides of the piston are alternately pressurized and de-pressurized to achieve a controlled linear displacement of the piston and turning this way also of any entity connected to the piston. The physical linear displacement is only along the axis of the piston.

Unfortunately, currently known types of actuators have a number of important drawbacks, one of the most important being the large amount of moving parts that make the actuator expensive. The different moving parts of the actuator, such as the piston and the hollow cylinder are prone to wear, providing typically known actuators with a limited cycle lifetime. Furthermore most electro-mechanical actuators are limited in the force of the displacement, have a low displacement velocity and are often unreliable in their displacement. Hydraulic and pneumatic actuators on the other hand typically provide good displacements in compression only, are sensitive to leakages and are unreliable in their displacement. The lack of reliability and reproducibility is a common drawback in all actuator systems, which often require position measuring and feedback means to improve the displacement repeatability.

Pneumatic Artificial Muscles or PAMs are specific types of actuators which are contractile or extensional and operated by pressurized air. Their mode of operation is similar to human muscles. However, PAMs are known to have a number of disadvantages. The force of the displacement is not only dependent on the pressure input but also on the state of inflation of the PAM, they are difficult to control precisely and, as they make use of long inflatable tubes, there is a delay between the movement control signal and the effective muscle action.

Accordingly, there is a need for alternative and improved types of actuators which provide fast and powerful displacements, which require no or only minimal maintenance and/or which have an easy and economical production cost.

### SUMMARY OF THE INVENTION

The present invention relates to actuator systems comprising a pressure inlet and one or more expansion chambers each comprising one or more cylindrical chambers connected through a connection channel. Upon activation, the cylindrical chambers expand and the actuator provides in a linear displacement along its longitudinal axis or another type of displacement such as an angular rotational displacement. When the actuator system is deactivated the cylindrical chambers of the expansion chamber return to their original position thereby providing a displacement in the opposite direction and returning the actuator to its original position. The activation of the actuator according to the present invention refers to the application of pressure. By pressurization or depressurization of the actuator, the displacement of the actuator is achieved, whereas the opposite action, respectively depressurization or pressurization, or the absence of the pressurized of depressurized state returns the actuator to its original position. In particular embodiments, the actuators according to the invention comprise several expansion chambers, which allows for a further increase of the displacement ensured.

In a first aspect, the present invention provides actuators comprising an expansion chamber provided with an inlet for providing a connection to a pressure system, characterized therein that the expansion chamber comprises one or more cylindrical chambers serially coupled through a connection channel, wherein the inner corners of the cylindrical chambers and/or the outer corners formed by the connection channel and the cylindrical chambers are recessed.

In particular embodiments, the actuators of the invention may further comprise a guiding system coupled to the outer structure of the actuator.

In particular embodiments, the actuators of the invention comprise an extension structure connected onto the outer surface of a cylindrical chamber of the expansion chamber, which follows the movement of the actuator.

In particular embodiments, the actuator further comprises a pressure system connected to the inlet. The pressure system may be a pneumatic or hydraulic system. In further particular embodiments, the pressure system ensures the application of a pressure or a vacuum to the inlet.

In particular embodiments the ratio of the average wall thickness of the recessed corners with respect to the average wall thickness cylindrical chamber ranges between 1/50 and 4/5.

In further particular embodiments, the thickness of the walls is at least 0.3 mm.

In particular embodiments, the actuators according to the present invention are made of a single piece of material. This avoids assembly costs and reduces maintenance costs. More particularly they are produced by rapid manufacturing techniques, also referred to as additive manufacturing techniques or material deposition manufacturing techniques. In further particular embodiments, the actuators of the present invention are made of sintered polyamide.

In a further aspect, the present invention provides the use of an actuator according to the present invention, for ensuring a pushing action, pulling action, clamping action, releasing action and/or centering action. In particular embodiments the actuators of the present invention are used to release a clip mechanism.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.
**Figure 1** provides a perspective view of an actuator according to particular embodiment of the present invention.
**Figure 2** provides a side view (A) and cross section view (B) of an actuator according to a particular embodiment of the present invention.
**Figure 3** provides a cross section view of an actuator according to a particular embodiment of the present invention upon pressurization.
**Figure 4** provides a schematic representation of a cross section view of an actuator according to a particular embodiment of the present invention.
**Figure 5** provides a schematic representation of a cross section view of an actuator according to particular embodiment of the present invention upon pressurization.
**Figure 6** provides a schematic representation of a detailed cross section view of part of the cylindrical chambers of an actuator according to particular embodiments of the present invention.
**Figure 7** provides a side view of an actuator which ensures a non-linear movement according to a particular embodiment of the present invention.

List of reference numerals used in the Figures. Each of these illustrations represents particular embodiments of the features concerned and the corresponding features are not to be interpreted as limited to this specific embodiment.
**(1)** Actuator
**(2)** Expansion chamber
**(3)** Inlet
**(4)** Cylindrical chamber
**(5)** Connection channel
**(6)** Inner corners of the cylindrical chambers
**(7)** Outer corners formed by the connection channel and the cylindrical chambers
**(8)** Guiding structure
**(9)** Extension structure
**(10), (11)** Opposite parts of a cylindrical chamber according to particular embodiments of the invention

### DETAILED DESCRIPTION

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the preferred methods and materials are now described.

As used herein, the singular forms "a", "an", and "the" include both singular and plural referents unless the context clearly dictates otherwise. The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of". The recitation of numerical ranges by endpoints includes all numbers and fractions subsumed within the respective ranges, as well as the recited endpoints. The term "about" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1% or less of and from the specified value, insofar such variations are appropriate to perform in the disclosed invention. It is to be understood that the value to which the modifier "about" refers is itself also specifically, and preferably, disclosed. All documents cited in the present specification are hereby incorporated by reference in their entirety.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The terms or definitions used herein are provided solely to aid in the understanding of the invention.

As used in this application, the terms "actuator" and "actuator system" are used interchangeable and refer to a device for performing a movement by converting hydraulic or pneumatic energy into some kind of motion. Linear actuators are actuators where the resulting motion provides a force in a linear manner. Other types of motion may also be provided such as for instance a rotational or angular displacement. Also a combinational displacement, referring to a combination of a linear and angular displacement may be provided by the actuator.

The present invention provides in an actuator system comprising a pressure inlet and one or more expansion chambers each comprising one, two, three or more cylindrical chambers serially connected through a connection channel. Accordingly, the inner space of the expansion chamber corresponds to the inner space formed by the coupled cylindrical chambers. Upon activation, the expansion chamber expands (as a result of the cylindrical chambers expanding) and the actuator ensures a linear displacement along its longitudinal axis or another type of displacement such as an angular displacement. According to particular embodiments, the actuators according to the present invention are linear actuators. When the actuator system is deactivated the expansion chamber returns to its original position thereby providing a displacement in the opposite direction and returning the actuator to its original position. The activation of the actuator according to the present invention refers to the application of pressure. By pressurization or depressurization of the actuator, the displacement of the actuator is achieved, whereas the opposite action, respectively depressurization or pressurization, or the absence of the pressurized of depressurized state returns the actuator to its original position. According to particular embodiments, the actuators of the invention are single-acting pneumatic actuators, in that air ensures actuation in one direction and the reaction of the cylindrical chambers ensures movement in the reverse direction.

The actuator according to the present invention provides a system which is highly resistant to wear as the number of moving parts is minimized, thereby minimizing the wear on the actuator even when the load to be displaced is large.

The displacement of the actuator may occur in a variety of manners including a linear and/or angular displacement. A linear displacement occurs along the longitudinal axis of the actuator. The longitudinal axis refers to an imaginary line running down the centre of the actuator running through the central axis of the cylindrical chambers. An angular or rotational displacement refers to a displacement around an axis perpendicular to the actuator, thereby providing a rotational or circular motion. Also a combinational displacement, referring to a combination of a linear and angular displacement, may be provided by the actuator.

According to particular embodiments, the present invention provides actuators comprising an expansion chamber provided with an inlet for providing a connection to a pressure system, characterized therein that the expansion chamber comprises one or more cylindrical chambers serially coupled through a connection channel, wherein the inner corners of the cylindrical chambers formed by the connection channel the inner surface of the cylindrical chamber and/or the outer corners formed by the connection channel and the outer surface of the cylindrical chamber are recessed.

When referring to the parts of the cylindrical chamber herein, reference is made to the base surfaces as the surfaces corresponding to the circular top and bottom caps of a cylinder, and the lateral wall, which provides the circumference of the cylinder and is connected to the bottom an top cap. As used herein the inner corners of the cylindrical chambers refer to the corners provided on the inside of the cylindrical chambers and formed by the inside base surfaces of the cylinder and the lateral surface wall. The inner corners therefore have a circular circumference. The outer corners formed by the connection channel and the cylindrical chambers refer to the corners provided on the outside of the actuator and formed by the outside wall of the connection channel and the outside base surfaces of the cylindrical chambers. The outer corners also have a circular circumference.

An important feature of the present invention is the recessed nature of the inner corners of the cylindrical chambers and/or the outer corners formed by the connection channel and the cylindrical chambers. These recessed corners provide the actuator with a high degree of flexibility and a long cycle lifetime. Furthermore the recessed corners provide the actuator system with an internal spring mechanism that will provide the actuator with its capacity to return to its original position when deactivated. The recessed corners according to the present invention provide the cylindrical chambers and/or the connection channels with a hinge that, when the actuator is activated, allows an enlargement of the cylindrical chamber and/or the connection channel, overall leading to the displacement of the actuator. Depending on the dimensions of the cylindrical chambers and/or the connection channels, and the corresponding recessed corners, the displacement of the actuator may be altered.

The recessed corners according to the invention can include various shapes, sizes, etc.. For example, the recessed corner can include one or more accurate or curved surfaces such as a spherical or conical shape to form a rounded concave surface with respect to a corner.

In particular embodiments at least one of the base surfaces of the cylindrical chambers of the expansion chamber is curved inwardly (concave), when the actuator is in a non-pressurized state. This allows an increase in the displacement of the expansion chamber upon pressurization. The base surface may either be straight or have an inward curve, the latter further improving the capacity of the actuator.

According to a particular embodiment of the present invention, the actuator is adapted to provide a rotational or angular displacement. In particular embodiments this is ensured by providing an expansion chamber comprising one or more cylindrical chambers wherein the base surfaces are (in a non-compressed state) not parallel with each other. This implies that for one part of the cylindrical chamber the size or surface of the lateral wall is larger compared to the size or surface of the lateral wall on the opposite side or part of the cylindrical chamber. Upon compression and decompression of the cylindrical chambers, the movement is not linear but angular or rotational.

As indicated above, the expansion chamber as provided in the actuator according to the present invention comprises one or more cylindrical chambers serially coupled through a connection channel. The serial coupling of the cylindrical chambers provides the actuator with a large degree of flexibility. Depending on the required displacement, the number of cylindrical chambers may be augmented, thereby increasing the displacement distance of the actuator. Each expansion chamber according to the actuators of the present invention comprises one, two, three or more cylindrical chambers serially connected through a connection channel. The number of serially connected cylindrical chambers is not limited and the expansion chamber may comprise 1, 2, 3, 4, 5, 6, 7, 8, 9 and 10 or more cylindrical chambers.

The specific dimensions of the cylindrical chambers of the expansion chamber further allow an accurate control of the displacement, making the displacement very accurate and controllable.

The expansion chambers of the actuator may have a typical diameter ranging from about 10 mm an up to several meters. Actuators known from the state of the art have an upper limitation of typically about 700 mm. The actuators according to the present invention may be up-scaled to dimensions larger than the dimensions of currently known actuators. The linear or other displacement provided by the actuator according to the present invention will increase together with the size of the expansion chambers.

The thickness of the walls of the expansion chamber can vary depending on the size of the actuator. Typically, the wall thickness at the recessed corners is smaller than the wall thickness of the rest of the expansion chamber. The recessed corners are thereby provided with a high degree of flexibility, without jeopardizing the strength of the recessed corners. Also, when using a pneumatic pressure system, the thinner walls at the recessed corners provide air to escape through the walls. The thickness of the walls at the recessed corners should therefore be small enough to provide flexibility, while still large enough to avoid too much leakage and jeopardize the strength of the actuator. Typical ratios of the average wall thickness of the recessed corners over the average wall thickness of the cylindrical chamber ranges between 1/50 and 4/5, preferably between 1/25 and 3/4 and more preferably between 1/10 and 2/3. According to particular embodiments, an actuator according to the present invention is provided wherein the ratio of the wall thickness of the recessed corners with respect to the cylindrical chamber ranges between 1/50 and 4/5.

In particular embodiments the thickness of the walls of the actuator is at least 0.3 mm. Depending on the application and size of the expansion chambers, the wall thickness may be increased accordingly as larger chambers requiring thicker walls. The thickness of the walls of the recessed corners should however remain small enough to still provide some flexibility. In a particular embodiment of the present invention the thickness of the walls of the actuator ranges between 0.1 mm and 10 cm, more particularly between 0.5 mm and 1 cm, and more particularly between 1 mm and 5 mm.

In particular embodiments, and most particularly when the actuators according to the present invention are used with a hydraulic pressure system, the internal surface of the expansion chambers may be sealed, making the expansion chambers liquid tight, and thereby increasing the efficiency of the actuator. Particular embodiments of the present invention provide actuators according to the present invention, further comprising a guiding system coupled the outer structure of the one or more expansion chambers, which guides the direction of the movement of the actuator.

The guiding system according to the present invention is typically a structure which extends along the expansion chamber and is attached for instance to the inlet. This feature provides the actuator with guidance. Especially when the actuators according to the present invention comprise a serial connection of multiple cylindrical chambers, the guiding system ensures that the displacement of the actuator is uniformly into a single direction. In particular embodiments, the guiding system is attached to one or more of the other parts of the actuator. In further particular embodiments the guiding system is an integral part of the actuator, more particularly is formed of a single piece of material with the remainder of the actuator.

According to particular embodiments, the actuators of the present invention are made of a single piece of material. This provides the advantage of reduced production cost, and reduced maintenance. In more particular embodiments the material is a material such as sintered Polyamide, nylon, PolyPropylene, carbon fiber reinforced themoplasts; glas sphere reinforced thermoplasts, glass fiber reinforced thermoplasts, etc..

In further particular embodiments, the actuators according to the invention are prepared by rapid manufacturing techniques, also referred to as layered manufacturing techniques or material deposition manufacturing techniques.

In particular embodiments, Rapid Prototyping and Manufacturing (RP&M) techniques, also called Additive Manufacturing techniques, are used for manufacturing the actuators of the invention. Currently, a multitude of Rapid Prototyping techniques is available, including stereo lithography (SL), Laser Sintering (LS), Fused Deposition Modeling (FDM), foil-based techniques, etc.

A common feature of these techniques is that objects are typically built layer by layer. Stereo lithography, presently the most common RP&M technique, utilizes a vat of liquid photopolymer "resin" to build an object a layer at a time. On each layer, an electromagnetic ray, e.g. one or several laser beams which are computer-controlled, traces a specific pattern on the surface of the liquid resin that is defined by the two-dimensional cross-sections of the object to be formed. Exposure to the electromagnetic ray cures, or, solidifies the pattern traced on the resin and adheres it to the layer below. After a coat had been polymerized, the platform descends by a single layer thickness and a subsequent layer pattern is traced, adhering to the previous layer. A complete 3-D object is formed by this process.

Laser sintering (LS) uses a high power laser or another focused heat source to sinter or weld small particles of plastic, metal, or ceramic powders into a mass representing the 3-dimensional object to be formed.

Fused deposition modeling (FDM) and related techniques make use of a temporary transition from a solid material to a liquid state, usually due to heating. The material is driven through an extrusion nozzle in a controlled way and deposited in the required place as described among others in U.S. Pat. No. 5.141.680.

Foil-based techniques fix coats to one another by means of gluing or photo polymerization or other techniques and cut the object from these coats or polymerize the object. Such a technique is described in U.S. Pat. No. 5.192.539.

Typically RP&M techniques start from a digital representation of the 3-D object to be formed. Generally, the digital representation is sliced into a series of cross-sectional layers which can be overlaid to form the object as a whole. The RP&M apparatus uses this data for building the object on a layer-by-layer basis. The cross-sectional data representing the layer data of the 3-D object may be generated using a computer system and computer aided design and manufacturing (CAD/CAM) software.

The actuators of the invention may be manufactured in a number of materials. Typically, a polyamide such as PA 12 or other materials suitable for additive manufacturing known by those skilled in the art may also be used. Other typical materials may include laser sinterable materials, powder materials that can be used in an additive manufacturing technology, powder thermoplastic materials with a sharp thermal transition, allowing the use in a laser sinter process, powder thermoplastic materials with a sharp thermal transition, that can be selectively melted into a 3D object via a layerwise partial or full melting process, thermoplastic materials suitable to be used in additive manufacturing processes via selective deposition of small extruded wires or wire-shaped thermoplastic materials that can be selectively deposited in an Additive Manufacturing process. As used herein, sharp thermal transition refers to a physical transition based upon a change in crystallinity and/or a change from glassy state to polymer melt that occurs over a limited temperature domain.

According to particular embodiments, the actuators of the present invention are provided with a protective coating which increases resistance against environmental factors and/or wear from use. Such a coating may cover all or part of the actuator. The coating can be of a different material than the actuator itself (therefore also referred to herein as an actuator assembly).

According to further particular embodiments, the actuators of the present invention are provided with additional components, which again increase resistance of the actuator or protect against wear. In addition such components may also be provided to increase its accuracy. The additional components may also be of a different material than the actuator itself (therefore also referred to herein as an actuator assembly)

As indicated above, the actuators according to the present invention comprise an inlet for providing a connection to a pressure system. The pressure system may be a pneumatic or hydraulic system.

Accordingly, the invention further provides actuators according to the present invention whereby a pressure system is connected to said inlet.

In particular embodiments of the present invention, the pressure system is a pneumatic pressure system.

In particular embodiments of the actuators according to the present invention the pressure system ensures the application of a pressure or a vacuum to the inlet of the actuator. Accordingly, the displacement provided by the actuators according to the invention may be provided through the application of pressure or a vacuum.

According to particular embodiments, the actuators according to the present invention further comprise an extension structure connected to one end of the expansion chamber (or, where multiple expansion chambers are used, to the end of the outer expansion chamber). This extension structure follows the movement of the actuator extension structure and extends the displacement of the actuator outside the actuator e.g. towards a target. In particular embodiments, the extension structure is a longitudinal structure, extending in the direction of the movement. In particular embodiments the extension structure comprises an end effector such as but not limited to a piston, a hook, a valve, or a wiring system which transfers the mechanical movement.

In particular embodiments, the extension structure comprises a means to translate the linear and/or angular displacement into another type of displacement. As an example, the extension structure may be provided with a rack which drives a pinion, thereby translating the displacement into the displacement of one or more gearwheels.

A further aspect of the present invention relates to the use of an actuator according to the present invention, for ensuring a pushing action, pulling action, clamping action, releasing action and/or centering action. In particular embodiments the actuators of the present invention are used to provide a linear and/or angular movement of fixation means. In more particular embodiments the actuators according to the invention are used to ensure fastening and/or release of a clip mechanism.

The present invention is hereafter exemplified by the illustration of particular, non-limiting embodiments.

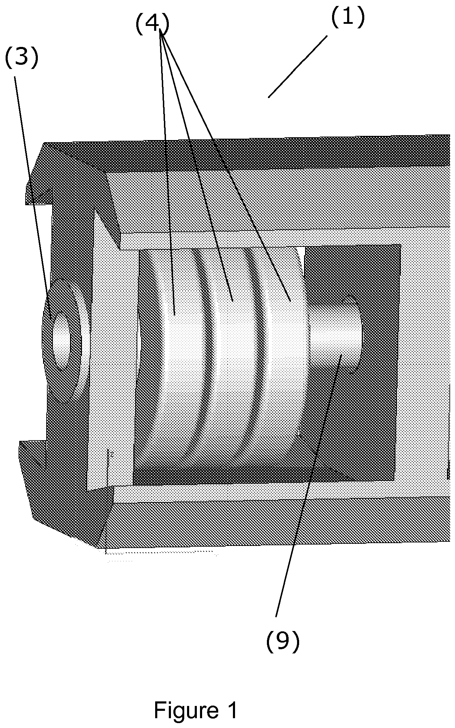

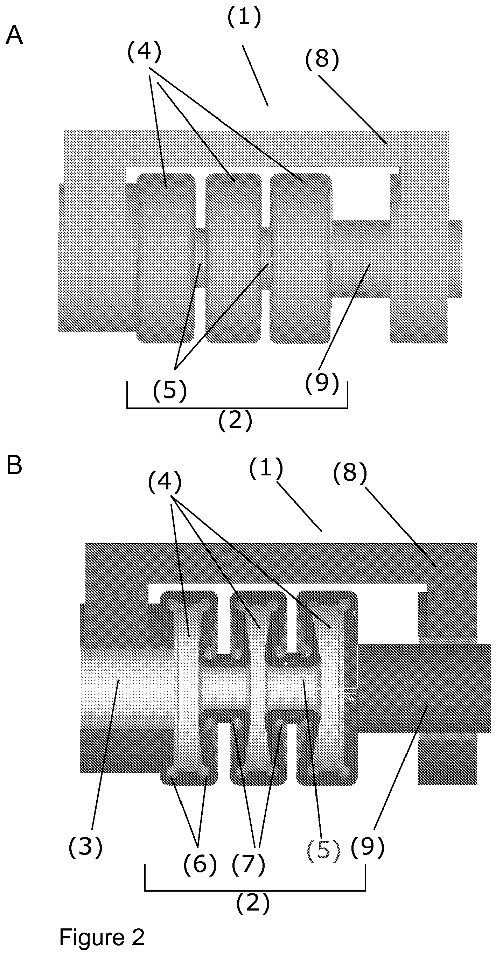

Figures 1 and 2 provide a side view (Figure 2a), a cross section view (Figure 2b) and a perspective view (Figure 1) of an actuator (1) according to particular embodiments of the present invention. The actuator (1) comprises an expansion chamber (2) provided with an inlet (3) for providing a connection to a pressure system, characterized therein that said expansion chamber (2) comprises one or more cylindrical chambers (4) serially coupled through a connection channel (5), wherein the inner corners of the cylindrical chambers (6) and the outer corners formed by the connection channel and the cylindrical chambers (7) are recessed. The actuator is further provided with a guiding feature (8) and an extension structure (9).

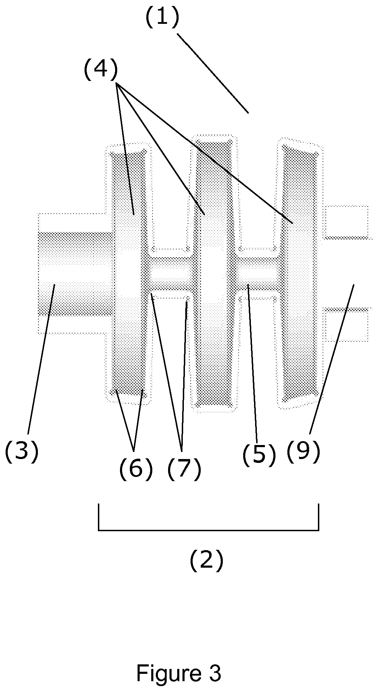

Figure 3 provides a cross section view of a pressurized actuator (1) according to a particular embodiment of the invention. The base surfaces of the cylindrical chambers are convex as a result of the pressure applied, resulting in an expansion of the expansion chamber.

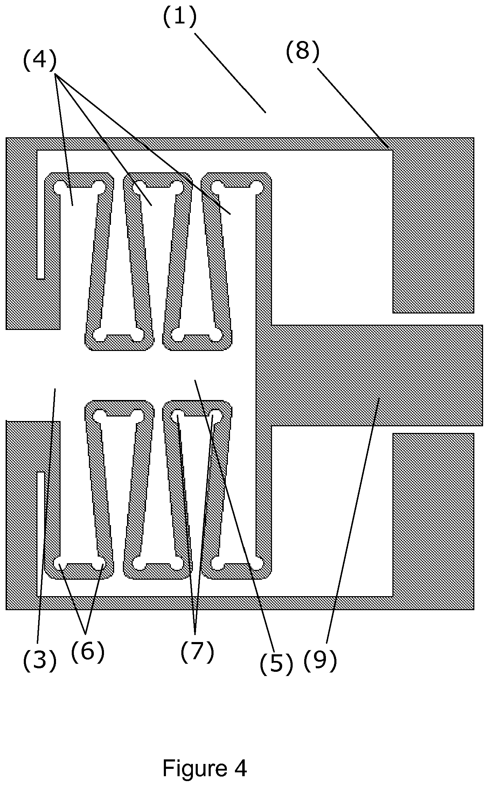

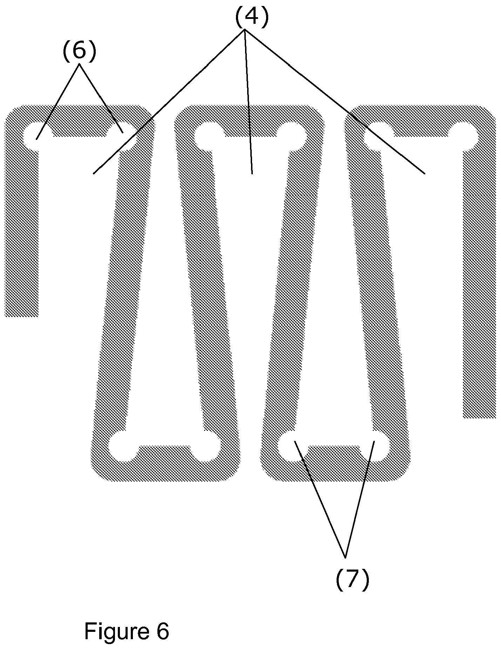

Figures 4 and 6 provide a cross section view of an actuator (1) according to a particular embodiment of the present invention. The figures show cylindrical chambers (4) serially coupled through a connection channel (5), wherein the inner corners of the cylindrical chambers (6) and the outer corners formed by the connection channel and the cylindrical chambers (7) are recessed. Figure 4 illustrates in detail recessed corners having a concave rounded shape and extending inwardly from the corner cutting edge into the surface according to particular embodiments of the invention.

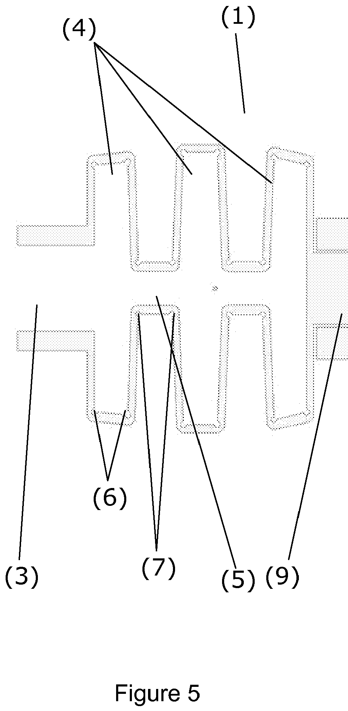

Figure 5 provides a cross section view of a pressurized actuator (1) according to a particular embodiment of the invention. The base surfaces of the cylindrical chambers (4) are convex as a result of the pressure applied, resulting in an expansion of the inner volume of the expansion chamber (2).

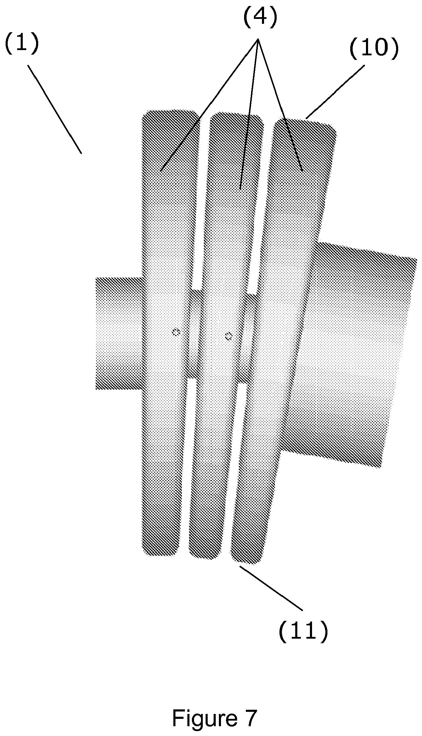

Figure 7 provides a side view of an actuator (1) according to particular embodiment of the present invention, which does not provide a linear movement. The actuator according to figure 7 is provided with a number of cylindrical chambers (4) wherein the base surfaces of each cylindrical chamber, corresponding to the circular top and bottom caps of a cylinder, are not parallel to each other. This entails that for one part of the cylindrical chamber (10) the size of the lateral wall is larger compared to the size of the lateral wall on the opposite part of the cylindrical chamber (11).

## Claims

1. An actuator (1) comprising an expansion chamber (2) provided with an inlet (3) for providing a connection to a pressure system, characterized therein that said expansion chamber comprises one or more cylindrical chambers (4) serially coupled through a connection channel (5), wherein the inner corners (6) of the cylindrical chambers and/or the outer corners (7) formed by the connection channel and the cylindrical chambers on the outside of the actuator are recessed, and wherein said actuator is made of a single piece of material.

2. The actuator according to claim 1, further comprising a guiding system (8) coupled to the outer structure of said actuator, which guides the direction of the movement of the actuator.

3. The actuator according to claim 1 or 2, wherein the ratio of the average wall thickness of the recessed corners with respect to the average wall thickness cylindrical chamber ranges between 1/50 and 4/5.

4. The actuator according to any of claims 1 to 3, further comprising an extension structure (9) connected onto the outer surface of a cylindrical chamber of said expansion chamber, which follows the movement of the actuator.

5. The actuator according to any one of claims 1 to 4, wherein said actuator provides a linear, rotational or combinational movement.

6. An actuator assembly comprising the actuator according to any of claims 1 to 5, comprising additional components which are assembled on said actuator.

7. The actuator assembly according to claim 6, comprising a pressure system connected to said inlet.

8. The actuator assembly according to claim 7, wherein said pressure system is a pneumatic pressure system.

9. The actuator assembly according to claim 7 or 8, wherein said pressure system ensures the application of a pressure or a vacuum to said inlet.

10. The actuator assembly according to any one of claims 6 to 9 comprising additional components which are assembled onto said actuator to increase the resistance of the actuator for wear and for increasing its accuracy.

11. An actuator assembly comprising the actuator according to any of claims 1 to 5, or the actuator assembly according to any one of claims 6 to 10, on which a protective coating is provided to increase its resistance against the environment of application.

12. Use of an actuator according to any one of claims 1 to 5, or the actuator assembly according to claims 6 to 10, for ensuring a pushing action, pulling action, clamping action, releasing action and/or centering action.

## Patentansprüche

1. Ein Stellantrieb (1), eine Expansionskammer (2) umfassend, die mit einem Einlass (3) zum Verbinden mit einem Drucksystem versehen ist, **dadurch gekennzeichnet, dass** die besagte Expansionskammer eine oder mehrere zylindrische Kammern (4) umfasst, die durch einen Verbindungskanal (5) in Reihe miteinander verbunden sind, wobei die inneren Eckpunkte (6) der zylindrischen Kammern und/ oder die äußeren Eckpunkte (7), die durch den Verbindungskanal und die zylindrischen Kammern an der Außenseite des Stellantriebs gebildet werden, vertieft sind, und wobei der besagte Stellantrieb aus einem einzigen Materialstück besteht.

2. Der Stellantrieb nach Anspruch 1, darüber hinaus ein Führungssystem (8) umfassend, das mit der Außenstruktur des besagten Stellantriebs verbunden ist, welches die Laufrichtung des Stellantriebs leitet.

3. Der Stellantrieb nach Anspruch 1 oder 2, wobei das Verhältnis der mittleren Wanddicke der vertieften Eckpunkte im Verhältnis zur mittleren Wanddicke der zylindrischen Kammer in einem Bereich zwischen 1/50 und 4/5 liegt.

4. Der Stellantrieb nach irgendeinem der Ansprüche 1 bis 3, darüber hinaus eine Erweiterungsstruktur (9) umfassend, die an der Außenfläche der zylindrischen Kammer der besagten Expansionskammer angeschlossen ist, die der Bewegung des Stellantriebs folgt.

5. Der Stellantrieb nach irgendeinem der Ansprüche 1 bis 4, wobei der besagte Stellantrieb eine Linear-, Dreh- oder kombinatorische Bewegung vorsieht.

6. Eine Stellantriebsbaugruppe, den Stellantrieb nach irgendeinem der Ansprüche 1 bis 5 umfassend, zusätzliche Komponenten umfassend, die auf dem besagten Stellantrieb montiert werden.

7. Die Stellantriebsbaugruppe nach Anspruch 6, ein Drucksystem umfassend, das am besagten Einlass angeschlossen ist.

8. Die Stellantriebsbaugruppe nach Anspruch 7, wobei das besagte Drucksystem ein pneumatisches Drucksystem ist.

9. Die Stellantriebsbaugruppe nach Anspruch 7 oder 8, wobei das besagte Drucksystem für die Anwendung eines Drucks oder eines Vakuums auf den besagten Einlass sorgt.

10. Die Stellantriebsbaugruppe nach irgendeinem der Ansprüche 6 bis 9, zusätzliche Komponenten umfassend, die auf dem besagten Stellantrieb montiert werden, um die Verschleißfestigkeit des Stellantriebs zu verbessern, sowie dessen Präzision zu erhöhen.

11. Eine Stellantriebsbaugruppe, den Stellantrieb nach irgendeinem der Ansprüche 1 bis 5 umfassend, oder Stellantriebsbaugruppe nach irgendeinem der Ansprüche 6 bis 10, auf der eine Schutzbeschichtung vorhanden ist, um deren Beständigkeit gegenüber der Anwendungsumgebung zu erhöhen.

12. Eine Verwendung eines Stellantriebs nach irgendeinem der Ansprüche 1 bis 5 oder der Stellantriebsbaugruppe nach den Ansprüchen 6 bis 10 zur Ausführung eines Schubs, eines Zugs, einer Klemmung, einer Lösung und/ oder einer Zentrierung.

## Revendications

1. Un actionneur (1) comprenant une chambre d'expansion (2) dotée d'une entrée (3) pour fournir un raccordement à un système de pression, **caractérisé en ce que** ladite chambre d'expansion comprend une ou plusieurs chambres cylindriques (4) couplées en série par un canal de liaison (5), dans lequel les coins intérieurs (6) des chambres cylindriques et/ou les coins extérieurs (7) formés par le canal de liaison et les chambres cylindriques à l'extérieur de l'actionneur sont évidés, et dans lequel ledit actionneur est réalisé en une seule pièce de matériau.

2. L'actionneur selon la revendication 1, comprenant en outre un système de guidage (8) couplé à la structure extérieure dudit actionneur, qui guide la direction du mouvement de l'actionneur.

3. L'actionneur selon la revendication 1 ou 2, dans lequel le rapport de l'épaisseur de paroi moyenne des coins évidés par rapport à l'épaisseur de paroi moyenne de la chambre cylindrique est entre 1/50 et 4/5.

4. L'actionneur selon l'une quelconque des revendications 1 à 3, comprenant en outre une structure d'extension (9) raccordée sur la surface extérieure d'une chambre cylindrique de ladite chambre d'expansion, qui suit le mouvement de l'actionneur.

5. L'actionneur selon l'une quelconque des revendications 1 à 4, dans lequel ledit actionneur fournit un mouvement linéaire, rotatif ou combinatoire.

6. Un ensemble actionneur comprenant l'actionneur selon l'une quelconque des revendications 1 à 5, comprenant des composants supplémentaires qui sont montés sur ledit actionneur.

7. L'ensemble actionneur selon la revendication 6, comprenant un système de pression raccordé à ladite entrée.

8. L'ensemble actionneur selon la revendication 7, dans lequel ledit système de pression est un système de pression pneumatique.

9. L'ensemble actionneur selon la revendication 7 ou 8, dans lequel ledit système de pression assure l'application d'une pression ou d'un vide à ladite entrée.

10. L'ensemble actionneur selon l'une quelconque des revendications 6 à 9 comprenant des composants supplémentaires qui sont montés sur ledit actionneur pour augmenter la résistance de l'actionneur à l'usure et augmenter sa précision.

11. Un ensemble actionneur comprenant l'actionneur selon l'une quelconque des revendications 1 à 5, ou l'ensemble actionneur selon l'une quelconque des revendications 6 à 10, sur lequel un revêtement de protection est prévu pour augmenter sa résistance contre l'environnement d'application.

12. Utilisation d'un actionneur selon l'une quelconque des revendications 1 à 5, ou de l'ensemble actionneur selon les revendications 6 à 10, pour assurer une action de poussée, une action de traction, une action de serrage, une action de libération et/ou une action de centrage.
